# EUROPEAN PATENT APPLICATION

(11) **EP 3 696 119 A1**
(43) Date of publication of application: **19.08.2020**
(21) Application number: 20157984.4
(22) Date of filing: 18.02.2020
(51) Int. Cl.: B65G 47/252, B65G 47/91

(54) **APPARATUS FOR UPENDING BOX-LIKE CONTAINING BODIES, AND CORRESPONDING METHOD**

(30) Priority: 18.02.2019 IT 201900002331
(71) Applicant: Steelco S.p.A., 31039 Riese Pio X (IT)
(72) Inventor: Capovilla, Ivone, 31037 Loria (IT)
(74) Representative: Petraz, Gilberto Luigi

(57) **Abstract**

Upending apparatus (10) for box-like containing bodies (11), which comprises a transport conveyor (12) and an upending assembly (14) configured to selectively rotate said box-like containing bodies (11).

## Description

### FIELD OF THE INVENTION

Embodiments described here concern an apparatus for upending containers and the corresponding method. In particular, the upending apparatus and method according to the embodiments described here can be used in the context of the treatment of containers used to house laboratory animals.

### BACKGROUND OF THE INVENTION

Within the field of scientific research, it is known to house laboratory animals, subjected to experimental tests, such as for example guinea pigs, or other small rodents such as mice, rats, rabbits, in containing devices, also called cages.

Containing devices typically comprise a plurality of reciprocally connected components and configured to contain and raise animals.

Known containing devices typically comprise a box-like containing body, also called a tray or container, in which the animals are disposed, a feeder, generally with a reticular structure, in which the food for the animals is disposed, and an upper closing lid.

An absorbent material is distributed on the bottom of the box-like containing body, usually sawdust, or sand, which defines a litter to absorb and collect animal excrement.

It is also known that the containing devices as above must periodically undergo treatment operations for cleaning and sanitation.

The treatment operations typically comprise the disassembly of the containing device, the removal of the litter from the box-like containing body, the removal of food residues from the feeder, the washing and drying of the various components of the containing device and the final reassembly.

Washing can comprise pre-washing operations, washing with hot and/or cold water, washing with chemical agents, rinsing with hot and/or cold water, sterilization, disinfection/thermal disinfection or a combination thereof.

Downstream of the drying operations and before the final reassembly of the containing device, it is often necessary to refill the box-like containing body with the absorbent material, to reconstitute clean litter.

In some cases, these operations are performed entirely or partly manually by operators, but solutions for making automated plants are also known.

Examples of known plants are described in documents EP-2301866-B1, WO-2016/055968, US-A-6553939, US-A-2011/0054669 and WO-A-2008/142788.

These plants can have different operating units, possibly organized in stations, to carry out the steps of disassembling, washing, drying, filling and reassembling the containing device.

The movement of the containing device or its components to and from the stations and inside the stations can be done manually, by operators, with feed means, for example conveyor belts, or with mechanical movement means, for example robotic manipulators.

For example, document WO-A-2018/173088 shows an apparatus for transporting objects in a treatment machine.

Furthermore, it is often convenient to use different washing methods for the different components of the containing device.

For example, it is convenient to use more effective and aggressive washing methods for the box-like containing body, directly in contact with the animal and the litter, compared with those used for the lid.

For this reason, in plants it is often preferred to use washing stations specially designed for the box-like containing body, for example as shown in WO-A-2016/055968 and EP-B-2301866.

These washing stations can be washing tunnels, in which the box-like containing body is moved by means of feed means, passing through various operating units in which the different washing steps are carried out.

Typically, in the washing station for the box-like containing body, it is preferred to position the box-like containing body with the aperture facing downward, to allow the washing liquids to flow out and not accumulate on the bottom of the container.

On the contrary, during the operation to fill the box-like containing body, to remake the clean litter, it is necessary to position the box-like containing body with the aperture facing upward, to allow the absorbent material to settle and distribute itself on the bottom of the box-like containing body.

For this reason, the box-like containing body that leaves the washing station must be upended before being positioned in the filling station.

The upending operation can be performed manually or automatically, by means of robotic manipulators, as shown in WO-A-2016/055968, or by an automatic upending apparatus, as shown for example in EP-B-2301866 (EP'866).

In particular, the solution described in EP'866 tends to integrate the washing station with the filling station, which therefore form a single treatment line for the box-like containing body.

If on the one hand this solution can increase the speed and efficiency of the process and allow a reduced use of operators, with consequent reduction of costs and risks of accidents, on the other hand it has some disadvantages.

A first disadvantage is that the coupling mechanism shown in EP'866, based on mobile plates and bars that close to form a cage around the box-like containing body, can be unreliable when the box-like containing bodies have variable shapes and sizes and/or arrive with different orientations and positions.

A similar disadvantage can also be found in solutions based on grippers or other similar attachment means.

In addition, the solution shown in EP'866 is also very complex, due to the fact that there are many moving parts whose movement must be carefully adjusted according to the sizes of the box-like containing bodies.

On the other hand, other simpler design solutions, in which upending is obtained by means of gravity controlled falls, have the disadvantage that they do not provide a precise positioning of the exiting box-like containing bodies. Furthermore, in these solutions, impacts occur which can deteriorate the box-like containing bodies.

Another known solution is described in document JP-A-2014169177, which concerns a complex system for upending a body, in particular a substrate for liquid crystal panels.

This system, in addition to having the problems of the known systems and apparatuses as discussed above, does not address and solve the problems of alignment and centering that may arise for the bodies to be upended that are advancing on a transport conveyor in a determinate direction of feed.

There is therefore a need to perfect an upending apparatus for box-like containing bodies, and a corresponding method, which is sufficiently efficient and reliable to be integrated into treatment lines of box-like containing bodies for animals.

In particular, one purpose of the present invention is to provide an upending apparatus and method which are able to simultaneously handle box-like containing bodies, which can be initially fed also with different positions and orientations, therefore which are able to align, center and supply the box-like containing bodies oriented in the desired position and intended for the subsequent operations, in particular for filling.

Therefore, another purpose of the present invention is to provide an upending apparatus and method which, after upending, releases and disposes the box-like containing bodies in a precise and repeatable position.

Another purpose of the present invention is to provide a highly automated upending apparatus and method which can be integrated into a treatment line for box-like containing bodies.

Another purpose of the present invention is to ensure that the upending apparatus, and the corresponding method, perform the operation quickly, in such a way as to increase the operating speed of the washing line, increasing its efficiency and productivity.

Another purpose of the present invention is to ensure the upending apparatus, and the corresponding method, carry out the operation in a controlled manner, so as to avoid damaging the box-like containing bodies during movement and eliminate the possibility that some box-like containing bodies are not upended.

Another purpose of the present invention is to ensure that the apparatus and upending method are versatile and flexible, so as to be able to work with box-like containing bodies of varying sizes and shapes.

In particular, another purpose of the present invention is to provide an upending apparatus and method which are simple to manufacture, manage and control.

The Applicant has devised, tested and embodied the present invention to overcome the shortcomings of the state of the art and to obtain these and other purposes and advantages.

### SUMMARY OF THE INVENTION

The present invention is set forth and characterized in the independent claims.

The dependent claims describe other characteristics of the invention or variants to the main inventive idea.

Embodiments concern an upending apparatus for box-like containing bodies. The apparatus comprises a transport conveyor configured to feed box-like containing bodies in a direction of feed. The apparatus also comprises an upending assembly mounted in cooperation with the transport conveyor and provided with a gripping assembly, equipped with gripping suckers.

In some embodiments of the present invention, the gripping assembly is configured to selectively rotate, around an axis of rotation transverse to the direction of feed, between an angular pick-up position and an angular release position, different from the first angular pick-up position.

In the angular pick-up position, the gripping suckers are configured to be activated to pick up box-like containing bodies transported by the transport conveyor in a first condition. In the angular release position, the gripping suckers are configured to be deactivated to release the containers in a second condition, upended with respect to the first condition.

Furthermore, the present apparatus comprises an alignment assembly aligned with the upending assembly in the direction of feed.

The present apparatus also comprises a centering assembly, comprising two thrusters, disposed opposite each other and aligned on two opposite sides of the transport conveyor and configured to be driven in a coordinated manner, to vary the transverse positioning of the box-like containing bodies, aligning them with the position of the gripping suckers.

Some embodiments also concern a line for treating box-like containing bodies, comprising an upending apparatus in accordance with the present invention.

Some embodiments also concern a method for upending containers, comprising the steps of:
- supplying an upending assembly provided with a gripping assembly equipped with gripping suckers;
- feeding containers in a direction of feed;
- selectively rotating the gripping assembly, around an axis of rotation transverse to the direction of feed, between the angular pick-up position and the angular release position, to release the box-like containing bodies in the second condition, upended with respect to the first condition.

Furthermore, the method provides to:
- align the box-like containing bodies with the upending assembly in the direction of feed;
- center the box-like containing bodies; these box-like containing bodies are moved by a centering assembly, in order to vary their transverse positioning, aligning them with the position of the gripping suckers.

### ILLUSTRATION OF THE DRAWINGS

These and other characteristics of the present invention will become apparent from the following description of some embodiments, given as a non-restrictive example with reference to the attached drawings wherein:
- fig. 1 is a schematic perspective view of an upending apparatus, according to the embodiments described here;
- fig. 2 is a schematic perspective view of part of an upending apparatus, in accordance with the embodiments described here;
- figs. 2a, 2b, 2c, 2d are schematic top views of embodiments of part of an upending apparatus in accordance with the embodiments described here;
- fig. 3 is a schematic lateral view of an upending apparatus according to the embodiments described here, according to the present invention;
- fig. 4 is a schematic lateral view of a treatment line for box-like containing bodies comprising an upending apparatus in accordance with the embodiments described here;
- figs. 5a to 5f show an operating sequence of operating steps of an upending method, in accordance with the embodiments described here;
- fig. 6 is a top view of an upending apparatus in accordance with the embodiments described here;
- fig. 7 is a schematic perspective view of part of an upending apparatus, according to the embodiments described here.

To facilitate comprehension, the same reference numbers have been used, where possible, to identify identical common elements in the drawings. It is understood that elements and characteristics of one embodiment can conveniently be incorporated into other embodiments without further clarifications.

### DESCRIPTION OF EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

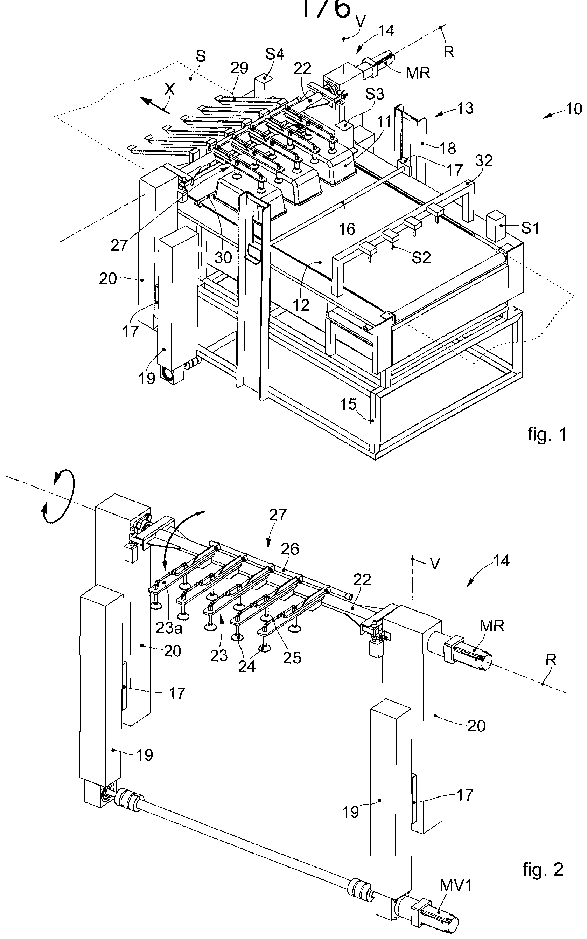

Fig. 1 is used to describe embodiments of an upending apparatus 10 for box-like containing bodies 11 in accordance with the present description.

For the purposes of this description, the box-like containing body 11 can be any container, of variable shapes and sizes, which has a base, or bottom, lateral walls and an aperture opposite the base.

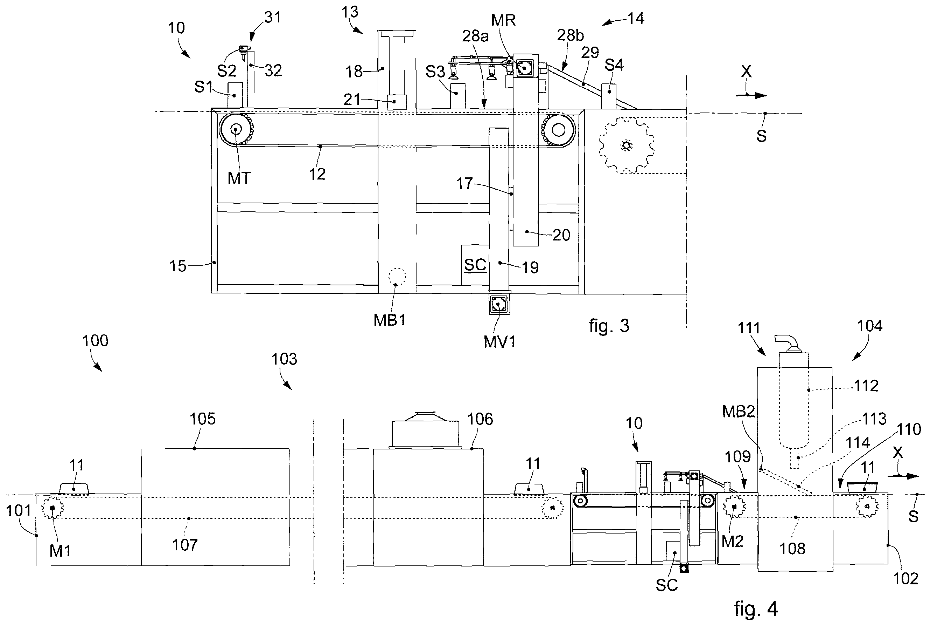

In some embodiments, the apparatus 10 can be disposed to upend one or more box-like containing bodies 11 at a time, which advance, possibly aligned, through the apparatus 10, along a feed plane S, in a direction of feed X (see for example figs. 1 and 3).

For simplicity, reference will be made below to the upending of a single box-like containing body 11 at a time, but this must not be considered as a limiting factor, since the apparatus 10 can also be used to upend a plurality of box-like containing bodies 11 simultaneously.

In some embodiments, the apparatus 10 comprises at least one transport conveyor 12, suitable to move the box-like containing body 11 along the feed plane S in the direction of feed X.

For this purpose, the transport conveyor 12 can be disposed passing through the apparatus 10.

In accordance with possible variants, the transport conveyor 12 can comprise one or more transport means moved by a transport drive device MT (fig. 3).

For explanatory purposes, hereafter in the description, the term "drive" will be used as an equivalent to the term "drive device".

In some embodiments, the transport means comprised or usable in the transport conveyor 12 can comprise, for example, conveyor belts, translating platforms, transfer belts, toothed belts, toothed chains, rollers, roller ways, and other similar or comparable devices, suitable to allow the movement of the box-like containing bodies 11 in the direction of feed X.

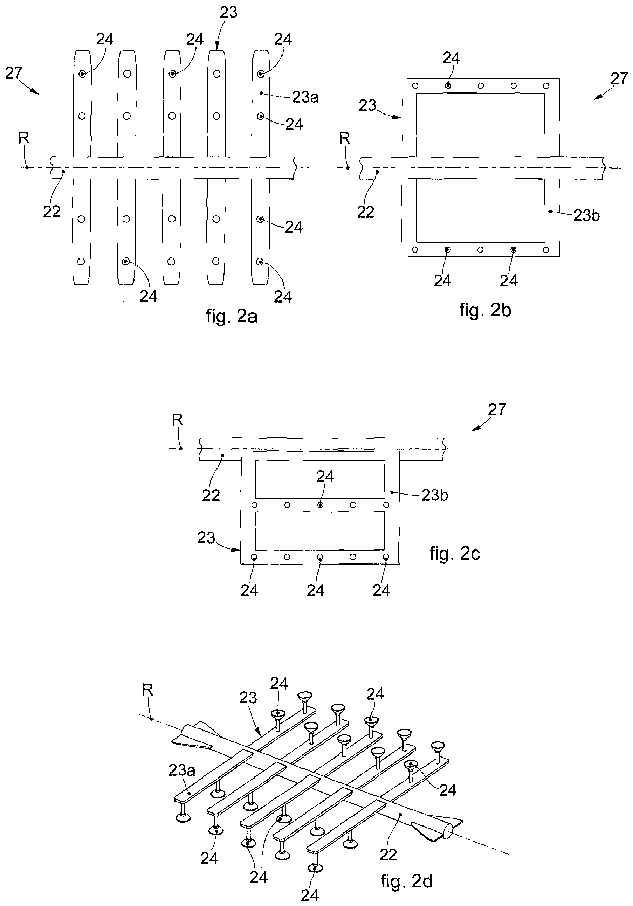

In some embodiments, for example described by figs. 1 and 2, the apparatus 10 comprises an upending assembly 14 mounted in cooperation with the transport conveyor 12 as above. The upending assembly 14 is provided with a gripping assembly 27, equipped with gripping suckers 24.

In some embodiments, the gripping suckers 24 can be or may include vacuum suckers, sucker hooks, self-sealing suckers and/or, in general, coupling means which exploit mechanisms based on the creation of negative pressures, or depressions.

In some embodiments, the gripping suckers 24 are also provided with a feeler pin, not shown in the drawings, suitable to detect the presence of a box-like containing body 11 in contact, and possibly send a corresponding presence signal.

The gripping assembly 27 as above is configured to selectively rotate by predefined values of angular travel, around an axis of rotation R transverse to the direction of feed X, between an angular pickup position P, in which the gripping suckers 24 are configured to be activated to pick up box-like containing bodies 11 transported by the transport conveyor 12 disposed in a first condition, and an angular release position D, different from the first angular pick-up position P, in which the gripping suckers 24 are configured to be deactivated in order to release the box-like containing bodies 11 disposed in a second condition, upended with respect to the first condition as above.

In some possible implementations, the angular release position D as above is substantially downstream of the angular pick-up position P with respect to the direction of feed X. In other possible implementations, the angular release position D is substantially coincident with the angular pick-up position P in the direction of feed X.

The angular pick-up position P and the angular release position D respectively define a pick-up portion 28a and a release portion 28b, possibly coinciding, in correspondence with the zones of the apparatus 10 in which the box-like containing body 11 is respectively picked up and released.

In the embodiments according to those described in figs. 1 and 3, the release portion 28b can be configured as a plurality of slides 29.

In possible embodiments, the gripping assembly 27 comprises a shaft 22 rotatably connected, around the axis of rotation R, to a rotary drive device MR associated with uprights 19, 20.

In some embodiments, a suction circuit can also be mounted on the shaft 22, comprising a plurality of pipes 25 and a collector 26, associated with the gripping suckers 24. In these embodiments, the collector 26 is in turn connected to a suction system not shown in the drawings, in order to activate the suckers 24.

The rotary drive device MR can be installed on fixed uprights 19, attached on the support frame 15, or it can be installed on mobile uprights 20, configured to slide vertically, by means of first sliding means 17 and at least one vertical drive device MV1, on the fixed uprights 19, in a vertical sliding direction V (figs. 1 and 2).

In some embodiments, one or more uprights 19, 20, or even all the uprights 19, 20, can be hollow inside, along their entire development or part of it, to allow to house devices, electric cables, gears and/or transmission means of the MR and/or vertical drive devices MV1.

Some embodiments can also provide that the vertical drive device MV1 is installed directly in the fixed uprights 19, and vertically moves the rotary drive device MR to which the shaft 22 is connected.

In some embodiments, it can be provided that the vertical drive device MV1 vertically moves the gripping assembly 27 directly or the gripping suckers 24 directly.

In the embodiments which provide the vertical drive device MV1, it is possible to adapt the height of the gripping assembly 27 with respect to the feed plane S to the height of the base of the box-like containing bodies 11, allowing to treat box-like containing bodies 11 of variable shapes and sizes with the same apparatus 10.

In some embodiments, the gripping assembly 27, in the angular pick-up position P, is configured to engage the box-like containing body 11 from above, by means of the gripping suckers 24.

Furthermore, these embodiments have the advantage of a high number of degrees of freedom of the upending assembly 14, which allows to increase the precision of the upending and to have greater flexibility on the shapes, sizes and type of box-like containing bodies 11 which can be upended.

In some embodiments, the gripping assembly 27 comprises a support assembly 23, mounted on the shaft 22 and equipped with the gripping suckers 24 as above.

In the embodiments described using figs. 2, 2d, the support assembly 23 comprises a plurality of rotating arms 23a, mounted cantilevered and attached on the shaft 22 at the height of one of their ends.

According to the variant shown in fig. 2a, the rotating arms 23a are mounted cantilevered and attached on the shaft 22 at the height of a median point thereof.

In other embodiments, for example described using figs. 2b and 2c, the support assembly 23 can be made as a single piece, for example as a single rotating frame 23b, attached to the shaft 22 at the height of one of its ends (fig. 2c) or a median part thereof (fig.2b).

According to another variant (not shown), the support assembly 23 comprises a plurality of rotating arms 23a, part of which is attached to the shaft 22 at the height of a median point thereof and part of which is attached to the shaft 22 at the height of one end.

It is also a variant (not shown) of the present invention to provide that different rotating arms 23a have different lengths, for example to facilitate the attachment of box-like containing bodies 11 of variable shapes and sizes.

Another variant, described by means of fig. 2d, provides that a first group of rotating arms 23a are mounted on the shaft 22, cantilevered on one side of the shaft 22 with the respective gripping suckers 24 oriented upward, and a second group of rotating arms 23a, rotated by 180° with respect to those of the first group, are mounted on the shaft 22, with the respective gripping suckers 24 oriented downward. In this variant, the axis of rotation R is a binary axis of symmetry and there are two equivalent configurations for each complete rotation.

This characteristic, as will become clearer later, can in some cases speed up upending, as it removes the need to perform a reverse rotation to bring the gripping assembly 27 back into position between one upending and the next.

During use, in the embodiments in which the support assembly 23 extends on two sides of the shaft 22 (figs. 2a, 2b, 2d), the vertical sliding of the mobile uprights 20 can be synchronized so as to prevent the ends of the support assembly 23 or the box-like containing body 11 attached to the gripping suckers 24 from impacting on the transport conveyor 12.

In some embodiments, the rotating arms 23a and the slides 29 can be staggered and can have coherent pitches, so as to allow the support assembly 23 to be retracted into the slides 29 when the gripping assembly 27 is in the angular release position D.

In the embodiments described using fig. 1 the upending assembly 14 comprises a fixed abutment 30, which for example can be a fixed bar or abutment plate, for example attached on the support frame 15, which has the function of stopping the feed of the box-containing body 11 when it arrives in the pick-up portion 28a.

In some embodiments, the apparatus 10 also comprises, aligned with the upending assembly 14 in the direction of feed X, an alignment assembly 13, for example attached to the support frame 15.

In some embodiments, the alignment assembly 13 comprises a first mobile abutment 16, for example an abutment bar, configured to be moved vertically by a suitable first abutment drive MB1, for example by means of second sliding means 21 constrained to guides 18.

In some embodiments, the first mobile abutment 16 can therefore be moved between a stop position, in which the height with respect to the feed plane S is less than the height of the box-like containing body 11, and a transit position, in which the height with respect to the feed plane S is greater than the height of the box-like containing body 11.

This characteristic can be advantageous in cases where there is a need to align the various box-like containing bodies 11 in transit through the apparatus 10 and/or stop their travel, for example in order to synchronize the operation of the assemblies 13, 14, 33 of the apparatus 10.

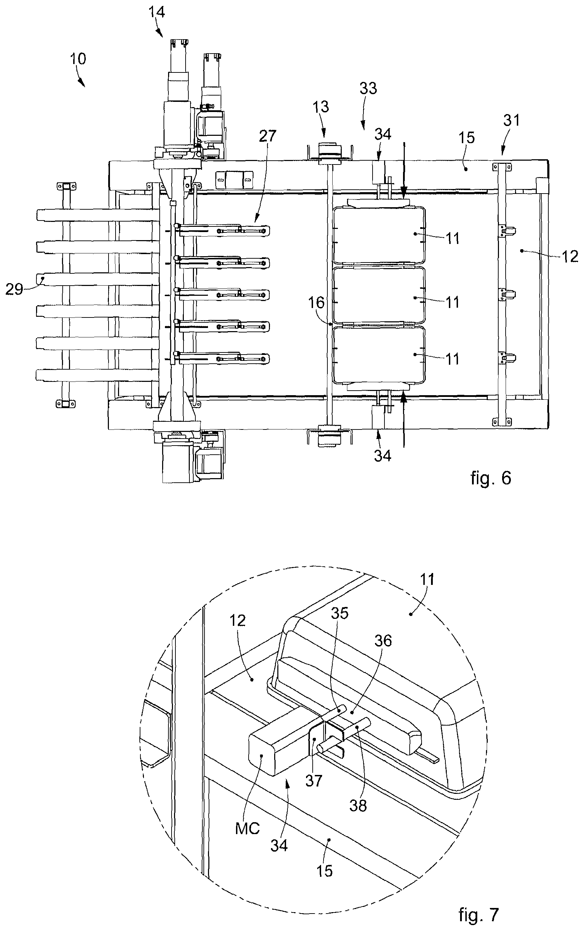

In embodiments described by fig. 6, the apparatus 10 comprises a centering assembly 33.

In some embodiments, the centering assembly 33 comprises two thrusters 34, for example mounted on the support frame 15 and disposed opposite and aligned with each other on two opposite sides of the transport conveyor 12.

In some embodiments, the two thrusters 34 can be positioned upstream of the first mobile abutment 16 of the alignment assembly 13, with respect to the direction of feed X.

The two thrusters 34 are suitable to be driven in a coordinated manner to vary the transverse positioning of the box-like containing bodies 11, aligning them with the position of the gripping suckers 24.

In some embodiments, described by way of example in fig. 7, each thruster 34 comprises a centering drive MC to which a transmission element 35 is connected, for example of an elongated cylindrical shape.

One end of the transmission element 35, distal to the centering drive MC, can be connected to a contrast element 36, for example a plate or a bar.

The centering drive MC is configured to move the transmission element 35 linearly, in a direction orthogonal to the direction of feed X, and parallel to the feed plane S.

When the two thrusters 34 are driven by the respective centering drives MC in the presence of several box-like containing bodies 11 stopped in abutment against the first mobile abutment 16, the two respective contrast elements 36 impart a transverse thrust on the lateral walls of the outermost box-like containing bodies 11, so as to vary their transverse positioning.

This coordinated action of the two thrusters 34 therefore results in a centering of the box-like containing bodies 11.

In some embodiments, there is also an anti-turn bracket 37, mounted on the external part of the centering drive MC, which cooperates with an anti-turn element 38, for example of an elongated cylindrical shape, mounted on the contrast element 36 and slidingly constrained to the anti-turn bracket 37.

This conformation allows to prevent possible unwanted rotations of the contrast element 36 during movement.

In some embodiments, the apparatus 10 as above also comprises a system controller SC and a detection assembly 31.

The detection assembly 31 is provided with a plurality of sensors S1, S2, S3, S4 configured to supply, to the system controller SC, respective signals correlated to the presence and/or height of the box-like containing bodies 11 upstream, downstream and/or in correspondence with the angular pick-up position P, in the direction of feed X.

Here and hereafter in the description, to simplify the language, the term "sensor" will be used in an equivalent manner to the terms "sensor group" or "sensor assembly", and will be understood only as a reference to the function, therefore without being considered limitative with respect to the actual number of sensors present.

For example, the terms "presence sensor" or "height sensor" will be understood as referring to respective groups of sensors, which can comprise an arbitrary number of sensors, suitable to acquire information, respectively, on the presence or height of the box-like containing body 11, and to send a presence signal or a height signal, respectively.

In the embodiments described using fig. 1 and 3, the detection assembly 31 can comprise a first presence sensor S1, for example a photocell, mounted directly on the support frame 15.

In the embodiments described using figs. 1 and 3, the detection assembly 31 can comprise a second height sensor S2, advantageously mounted on a special support upright 32, in turn attached on the support frame 15, which allows it to be super-elevated with respect to the feed plane S, so that the box-like containing body 11 passes below it.

In some embodiments, the first sensor S1 may not be present, and the presence information is obtained from the height information.

Advantageously, when several aligned box-like containing bodies 11 transit, it is possible to detect the height of all the box-like containing bodies 11 that are passing in alignment.

In particular, in some embodiments a third presence sensor S3 and/or a fourth presence sensor S4 can be provided, associated, respectively, with the pick-up portion 28a and the release portion 28b.

In some embodiments, the system controller SC as above is configured to command and control the device 10, based on the information received from the detection assembly 31 and/or based on timed movement programs.

The system controller SC can comprise, for example, a central processing unit, or CPU, an electronic memory, for example of the RAM and/or ROM type, and/or an external memory, an electronic database and auxiliary (or I/O) circuits (not shown).

The CPU can be any form of processing unit whatsoever, which can be used in the IT field for picking up, aligning and positioning objects, comprising for example a programmable logic controller (PLC).

Software instructions and data can be coded, for example, and stored in a memory to control the CPU.

A computer program (or computer instructions) readable by the system controller SC can determine which tasks are achievable in accordance with the method according to the present description.

In some embodiments, the information received from the detection assembly 31 can be loaded and stored in an electronic memory of, or associated with, the system controller SC.

In some embodiments, the apparatus 10 can be used integrated in a line 100 for the treatment of the box-like containing bodies 11 as above, in particular for example in the context of the treatment of box-like containing bodies used for housing laboratory animals.

In some embodiments, the line 100 can be an autonomous line or it can be part of a more complex treatment plant.

In some embodiments, the line 100 comprises a plurality of operating units, in each of which a specific operation is performed, which can be, for example, a prewashing unit, a unit for the distribution of washing solutions, a washing unit with hot and/or cold water, a unit for washing with chemical agents, a rinsing unit, a drying unit, a sterilization unit, a disinfection/thermal disinfection unit, a filling unit or a possible combination of the above.

On the line 100 it is possible to define a loading end 101 and an unloading end 102, in which the box-like containing body 11 is respectively loaded and unloaded, with manual and/or automatic modes, for example by means of robotic manipulators.

In some embodiments, the loading 101 and unloading ends 102 can be associated with other operating units, such as for example units for the disassembly and reassembly of the containing device respectively.

In the embodiments described using fig. 4, the operating units of the line 100 are organized in a washing station 103, associated with the loading end 101 and comprising a washing unit 105 and a drying unit 106, and a filling station 104, associated with the discharge end 102 and comprising a filling unit 111.

In some embodiments, the washing unit 105 can be configured, for example, as a washing tunnel or a washing line.

According to possible embodiments, such as for example those described using fig. 4, the operating units 105, 106, 111 of the line 100 are disposed aligned in the direction of feed X, according to a configuration also known as pass-through.

In some embodiments, the washing unit 105 is configured to wash the box-like containing body 11 disposed in a first condition, for example disposed with the aperture facing downward, and the filling unit 111 is configured to fill the box-like containing body 11 disposed in a second condition, upended with respect to the first condition, for example disposed with the aperture facing upward.

In some embodiments, between the washing station 103 and the filling station 104, there is an upending apparatus 10 in accordance with the present invention.

On the line 100 there are also feed means 107, 108, possibly passing through the stations 103, 104 and the operating units 105, 106, 111, suitable to move the box-like containing body 11 through the line 100, on the feed plane S, and in the direction of feed X.

In the embodiments described by fig. 4, in the washing station 103 there are first feed means 107, driven by a first drive M1, and in the filling station 104 there are second feed means 108, driven by a second drive M2.

In the embodiments described using fig. 4, the filling station 104 comprises an entry portion 109 and an exit portion 110.

In some embodiments, the fourth presence sensor S4 can be installed on the entry portion 109 of the filling station 104.

The filling unit 111 is equipped with one or more nozzles 113 to release predetermined doses of absorbent material, contained in a tank 112, into the box-like containing bodies 11.

In some embodiments there is a nozzle drive (not shown), which allows the predetermined doses of absorbent material to escape through the nozzles 113.

In some embodiments, these quantities of absorbent material contained in these predetermined doses are determined by processing the information of the height of the second sensor S2.

In some embodiments, the filling unit 111 also comprises a second mobile abutment 114, moved by a second abutment drive MB2 between a transit position and a stop position.

The present invention also concerns an automatic upending method of a box-like containing body 11.

According to some embodiments, the method comprises:
- supplying an upending assembly 14 provided with a gripping assembly 27 equipped with gripping suckers 24,
- feeding box-like containing bodies 11 in a direction of feed X;
- selectively rotating the gripping assembly 27, around an axis of rotation R transverse to the direction of feed X, between an angular pick-up position P, in which the gripping suckers 24 are activated to pick up the box-like containing bodies 11 transported by the transport conveyor 12 in a first condition, and an angular release position D, different from the first angular pick-up position P, in which the gripping suckers 24 are deactivated to release the box-like containing bodies 11 in a second condition, upended with respect to the first condition;
- aligning the box-like containing bodies 11 with the upending assembly 14 in the direction of feed X;
- centering the box-like containing bodies 11; the box-like containing bodies 11 are moved by the centering assembly 33, to vary their transverse positioning, aligning them with the position of the gripping suckers 24.

Furthermore, according to some embodiments, a detection step is provided in which a detection assembly 31 acquires information on the presence and/or height of the box-like containing body 11, and sends a presence signal and/or a height signal to a system controller SC, and an alignment step, in which, on the basis of the results of the detection step, the system controller SC possibly adjusts the height of the gripping assembly 27 with respect to the plane of the transport conveyor 12.

According to further embodiments, the alignment step also provides that one or more box-like containing bodies 11, moved by the transport conveyor 12, are aligned by the cooperation between the movement action of the transport conveyor 12 and a first mobile abutment 16, configured in the stop position.

In further embodiments, the alignment step can also comprise a centering step, which provides that several box-like containing bodies 11, possibly stopped in abutment against the first mobile abutment 16, are moved by the centering assembly 33 in a direction transverse to the direction of feed X and parallel to the feed plane S, to vary their transverse positioning, aligning them with the position of the gripping suckers 24.

The centering step can be advantageous to vary the transverse positioning of the box-like containing bodies 11, centering them with respect to the gripping assembly 27.

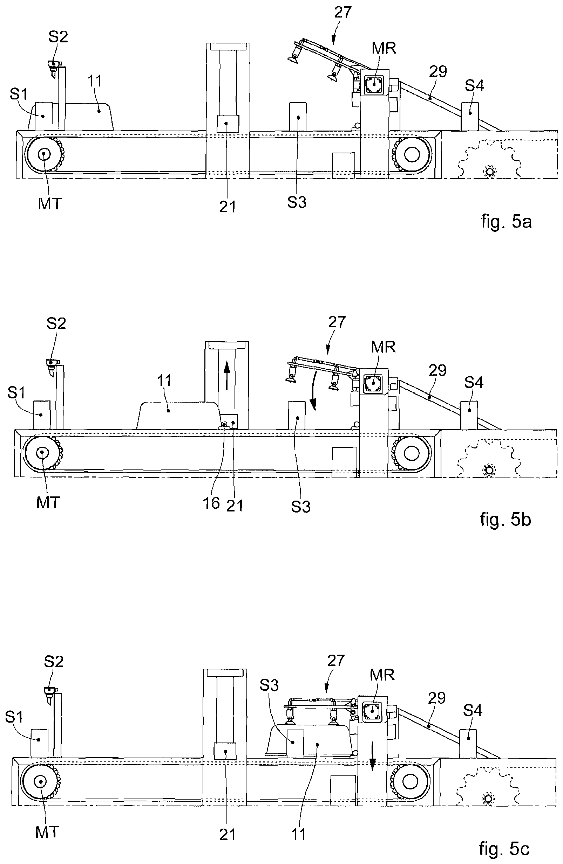

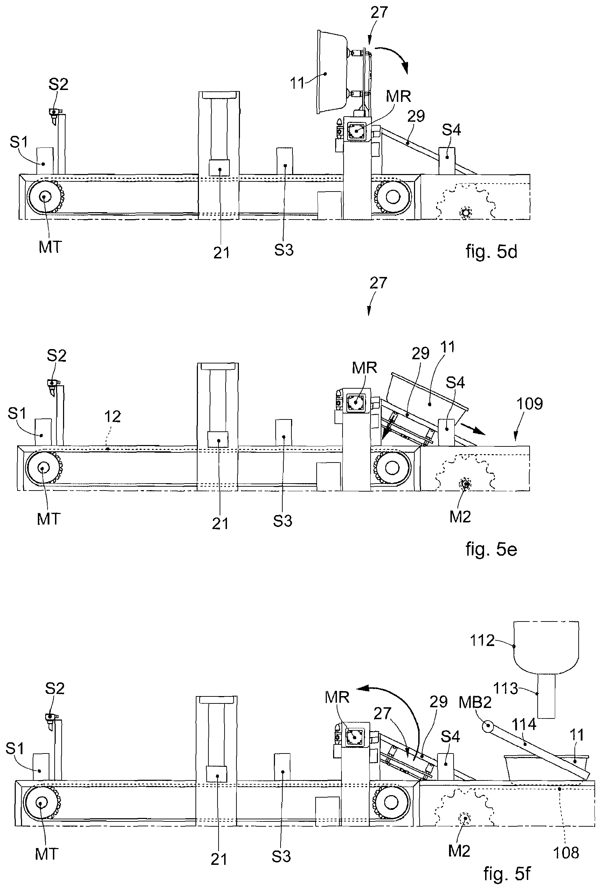

As described by way of example using fig. 5, embodiments of the method described above comprise, in particular, the steps of:
- detection (fig. 5a);
- alignment (fig. 5b);
- activation (fig. 5c);
- rotation (fig. 5d);
- deactivation (fig. 5e);
- filling (fig. 5f).

The present invention provides the possibility that while one or more aligned box-like containing bodies 11 are subjected to one step, another one or more box-like containing bodies, aligned, preceding and/or subsequent, are subjected to another step.

### Detection step

The detection step provides that the detection assembly 31 acquires information on the presence and/or height of the box-like containing body 11, and sends a presence signal and/or a height signal to the system controller SC.

As shown by way of example in fig. 5a, the first presence sensor S1 and/or the second height sensor S2 can send respective signals, presence and/or height, to the system controller SC.

In some embodiments, for example where the first presence sensor S1 is not present, the presence signal can be obtained from the height signal.

In some embodiments, the box-like containing body 11 arrives in the apparatus 10 with a speed imparted by the first feed means 107, so that it can pass in front of the sensors S1, S2 even if the transport conveyor 12 is stationary.

In some embodiments, when the system controller SC receives a suitable signal from the detection assembly 31, it activates the transport drive MT.

In some embodiments, when the system controller SC receives a suitable signal from the detection assembly 31, it activates the vertical drive MV1 to adjust the height of the mobile uprights 20 and/or of the gripping assembly 27 and/or of the gripping suckers 24, based on the height of the box-like containing body 11 in transit.

In some embodiments, when the system controller SC receives a suitable height signal from the detection assembly 31, it can intervene on the nozzle drive, so as to set the quantity of absorbent material to be used for filling, according to the sizes of the box-like containing body 11.

### Alignment step

As shown by way of example in fig. 5b, the alignment step initially provides that the box-like containing body 11 moved by the transport conveyor 12 stops against the first mobile abutment 16, configured in the stop position.

In some embodiments, the cooperation between the movement action of the transport conveyor 12 and the stop position of the first mobile abutment 16 produces an alignment of the different box-like containing bodies 11.

Furthermore, while the box-like containing body 11 is stationary against the first mobile abutment 16, the system controller SC can possibly adjust the height of the gripping assembly 27 with respect to the plane of the transport conveyor 12 based on the height signal received during the detection step.

Furthermore, while the box-like containing body 11 is stationary against the first mobile abutment 16, if the gripping assembly 27 is not in the angular pick-up position P, for example because it has just released a previously upended box-like containing body, the system controller SC can possibly return the gripping assembly 27 to the angular pick-up position P, for example by means of a reverse rotation.

Furthermore, in some embodiments, for example described by means of fig. 7, while the box-like containing body 11 is stationary against the first mobile abutment 16, the system controller SC can possibly activate the centering assembly 33 to vary the transverse positioning of the box-like containing bodies 11, center them and align them with respect to the position of the gripping suckers 24.

The centering step can be advantageous if the box-like containing bodies 11 advance in a manner that is not aligned with the gripping suckers 24, for example due to an imprecise manual positioning, or due to the fact that they have variable sizes, or due to any displacements due to the jets of water or air respectively in the washing and drying stations.

The alignment step also provides that, based on timing programs or upon reception of a suitable signal from the detection assembly 31, or from an encoder associated with the upending assembly 14, the system controller SC activates the first abutment drive MB1 to move the first mobile abutment 16 into the transit position.

### Activation step

The activation step initially provides that the box-like containing body 11 abuts against the fixed abutment 30, and that in its travel it is possibly detected by the third sensor S3, which sends a signal to the system controller SC.

In some embodiments, when the system controller SC receives an activation signal, for example the presence signal sent by the third sensor S3, it activates the rotary drive MR and/or vertical drive MV1 to bring the gripping assembly 27 closer to the box-like containing body 11 and activate the gripping suckers 24.

In some embodiments, when the system controller SC receives the activation signal, it can also activate the first abutment drive MB1, to return the first mobile abutment 16 to the stop position, to stop the travel of a possible subsequent box-like containing body 11.

In further embodiments, the system controller SC can perform activation at regular time intervals.

In some embodiments, when the system controller SC receives the activation signal, it activates the suction system which creates the vacuum in the gripping suckers 24.

In some embodiments, for example in which the gripping suckers 24 are self-sealing, it is possible that they operate autonomously in contact with the box-like containing body 11, without passing through the system controller SC.

In the embodiments where the gripping suckers 24 are equipped with a feeler pin, the suction system creates the vacuum only in the gripping suckers 24 in contact with the base of the box-like containing body 11.

In these embodiments, the feeler pin can also send a feedback signal to the system controller SC to confirm activation has taken place.

### Rotation step

The rotation step provides to selectively rotate the gripping assembly 27, around an axis of rotation R transverse to the direction of feed X, between an angular pick-up position P, in which the gripping suckers 24 are activated to pick up the box-like containing bodies 11 transported by the transport conveyor 12 in a first condition, and an angular release position D, possibly downstream of the angular pick-up position P in the direction of feed X, in which the gripping suckers 24 are deactivated to release the box-like containing bodies 11 in a second condition, upended with respect to the first condition.

In some embodiments, the angular travel of the rotation is disposed in such a way that the base of the box-like containing body 11, at the end of the rotation, is in a position substantially parallel to the inclined plane of the slides 29.

In the embodiments in which the gripping assembly 27 extends on two sides of the shaft 22, such as for example those shown in the middle of figs. 2a, 2b, 2d, the system controller SC can perform the rotation step by acting simultaneously on both the rotary drive MR and the vertical drive MV1, to prevent any impacts of the gripping assembly 27 or the box-containing body 11 and the plane of the conveyor 12.

Advantageously, in the embodiments in which the gripping suckers 24 are provided with a feeler pin, the accidental release of the box-like containing body 11 during rotation can be detected. In these cases, the system controller SC can, for example, block the device 10 or line 100 and/or report the event to an operator and/or can provide an automatic program to manage the event.

In some embodiments, when rotation has occurred, a signal that the rotation has occurred is sent to the system controller SC, for example from an encoder of the rotary drive MR when a certain value of angular travel is reached, for example corresponding to the angular position of release D.

### Deactivation step

In some embodiments, the deactivation step provides that the system controller SC deactivates the gripping suckers 24, for example by acting on the suction system, to release the box-like containing body 11 from the gripping assembly 27.

In some embodiments, the system controller SC deactivates the gripping suckers 24 following the reception of the signal of rotation having occurred or on the basis of timed programs.

In some embodiments, the box-like containing body 11, in position on the slides 29 and released from the gripping assembly 27, slides by gravity toward the filling station 104.

In further embodiments, the box-like containing body 11 is released directly onto the transport conveyor 12 in operation, or onto the second feed means 108.

In some embodiments, following the reception of the signal that rotation has occurred, the system controller SC activates the second drive M2 of the second feed means 108.

In some embodiments, following the reception of the signal that rotation has occurred, the system controller SC lowers the second mobile abutment 114.

In alternative embodiments, the signal that rotation has occurred is sent after the deactivation step, instead of after the rotation step, for example by the fourth sensor S4, when it detects the presence of the box-like containing body 11 on the terminal portion of the slides 29 and/or in the release portion 28b and/or in the entry portion 109 of the filling station 104.

In alternative embodiments, the signal that rotation has occurred can be sent by the feeler pin of the gripping suckers 24, when it detects their deactivation.

### Filling step

As shown by way of example in fig. 5e, the filling step provides to fill the box-like containing body 11 with absorbent material to form a new litter.

Following the deactivation step, the box-like containing body 11, moved by the second feed means 108, stops in abutment against the second mobile abutment 114 in the stop position.

In some embodiments, the filling of the box-like containing body 11 and subsequent lifting of the second mobile abutment 114 are controlled by the system controller SC in a timed manner.

In some embodiments, the quantity of absorbent material that is inserted into the box-like containing body 11 is adjusted by the system controller SC on the basis of the height information received from the second sensor S2.

Following filling, the system controller SC moves the second mobile abutment 114 into the transit position, to allow the box-like containing body 11 to exit from the filling station 104.

In some embodiments, at the same time as the box-like containing body 11 is filled, the gripping assembly 27 returns to the angular pick-up position P, with a reverse rotation.

Advantageously, in the embodiments according to that described in fig. 2d, this reverse rotation is not necessary, since the angular release position D of one box-like containing body 11 coincides with the angular pick-up position P of a new box-like containing body 11.

In some embodiments, the system controller SC can include a computer program, or software which performs the steps of the method as above.

It is clear that modifications and/or additions of parts may be made to the apparatus and method as described heretofore, without departing from the field and scope of the present invention.

It is also clear that, although the present invention has been described with reference to some specific examples, a person of skill in the art shall certainly be able to achieve many other equivalent forms of apparatus and method, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Upending apparatus (10) for box-like containing bodies (11), said apparatus comprising:
- a transport conveyor (12) configured to feed box-like containing bodies (11) in a direction of feed (X);
- an upending assembly (14) mounted in cooperation with said transport conveyor (12) and provided with a gripping assembly (27), equipped with gripping suckers (24), said gripping assembly (27) being configured to selectively rotate, around an axis of rotation (R) transverse to said direction of feed (X), between an angular pick-up position (P) in which said gripping suckers (24) are configured to be activated to pick up box-like containing bodies (11) transported by said transport conveyor (12) disposed in a first condition, and an angular release position (D), different from said first angular pick-up position (P), in which said gripping suckers (24) are configured to be deactivated to release said box-like containing bodies (11) disposed in a second condition, upended with respect to said first condition;
- an alignment assembly (13) aligned with the upending assembly (14) in said direction of feed (X),
- a centering assembly (33), comprising two thrusters (34), disposed opposite each other and aligned with each other on two opposite sides of the transport conveyor (12) and configured to be driven in a coordinated manner, in order to vary the transverse positioning of said box-like containing bodies (11), aligning them with the position of said gripping suckers (24).

2. Apparatus (10) as in claim 1, **characterized in that** said gripping assembly (27) comprises a shaft (22) rotatably connected, around said axis of rotation (R), to a rotary drive device (MR) associated with uprights (19, 20).

3. Apparatus (10) as in claim 2, **characterized in that** said uprights are fixed uprights (19), attached on a support frame (15), or mobile uprights (20) configured to slide vertically, by means of a vertical drive device (MV), on said fixed uprights (19).

4. Apparatus (10) as in any claim hereinbefore, **characterized in that** said angular release position (D) is substantially downstream of said angular pick-up position (P) with respect to said direction of feed (X).

5. Apparatus (10) as in any claim from 1 to 3, **characterized in that** said angular release position (D) is substantially coincident with said angular pick-up position (P) in the direction of feed (X).

6. Apparatus (10) as in any claim hereinbefore, **characterized in that** it comprises one or more slides (29) in correspondence with said angular release position (D), able to receive said box-like containing bodies (11) in the second upended condition and to move them forward in the direction of feed (X).

7. Apparatus as in any claim hereinbefore, **characterized in that** said gripping assembly (27) comprises a plurality of rotating arms (23a) on which said gripping suckers (24) are mounted.

8. Apparatus as in any claim hereinbefore, **characterized in that** said gripping assembly (27) comprises a single rotating frame (23b) on which said gripping suckers (24) are mounted.

9. Apparatus as in any claim hereinbefore, **characterized in that** said gripping assembly (27) is configured to engage from above, by means of said gripping suckers (24), said box-like containing bodies (11) in said angular pick-up position (P).

10. Apparatus (10) as in any claim hereinbefore, **characterized in that** it also comprises a detection assembly (31) and a system controller (SC), said detection assembly (31) being provided with a plurality of sensors (S1, S2, S3, S4) configured to supply, to said system controller (SC), respective signals correlated to the presence and/or height of said box-like containing bodies (11) upstream, downstream and/or in correspondence with said angular pick-up position (P), in said direction of feed (X).

11. Line (100) for treating box-like containing bodies (11), comprising an upending apparatus (10) as in any claim hereinbefore.

12. Method for upending box-like containing bodies (11), said method comprising:
- supplying an upending assembly (14) provided with a gripping assembly (27) equipped with gripping suckers (24),
- feeding box-like containing bodies (11) in a direction of feed (X);
- rotating said gripping assembly (27) selectively, around an axis of rotation (R) transverse to said direction of feed (X), between an angular pick-up position (P), in which said gripping suckers (24) are activated to pick up the box-like containing bodies (11) transported by said transport conveyor (12) in a first condition, and an angular release position (D), different from said first angular pick-up position (P), in which said gripping suckers (24) are deactivated in order to release said box-like containing bodies (11) in a second condition, upended with respect to said first condition;
- aligning the box-like containing bodies (11) with the upending assembly (14) in said direction of feed (X);
- centering the box-like containing bodies (11), said box-like containing bodies (11) being moved by a centering assembly (33), in order to vary their transverse positioning, aligning them with the position of said gripping suckers (24).

13. Method as in claim 12, **characterized in that** a detection step is provided in which a detection assembly (31) acquires information on the presence and/or height of the box-like containing body (11), and sends a signal of presence and/or a signal of height to a system controller (SC).

14. Method as in claim 13, **characterized in that** during said alignment step, depending on the result of the detection step, the system controller (SC) possibly adjusts the height of the gripping assembly (27) with respect to the plane of the transport conveyor (12), by means of a vertical drive device (MV1).

15. Method as in claim 12, **characterized in that** the alignment step also provides that one or more box-like containing bodies (11), moved by the transport conveyor (12), are aligned by the cooperation between the movement action of the transport conveyor (12) and a first mobile abutment (16), configured in a stop position.
